# EUROPÄISCHE PATENTSCHRIFT

(11) **EP 3 436 261 B1**
(45) Veröffentlichungstag und Bekanntmachung des Hinweises auf die Patenterteilung: **25.06.2025**
(21) Anmeldenummer: 17719816.5
(22) Anmeldetag: 07.04.2017
(51) Int. Cl.: B32B 18/00, H01B 19/00, H01B 3/12

(54) **VERFAHREN ZUR HERSTELLUNG EINES KERAMISCHEN ISOLATORS**
METHOD FOR PRODUCING A CERAMIC INSULATOR
PROCÉDÉ DE FABRICATION D'UN ISOLATEUR CÉRAMIQUE

(30) Priorität: 19.05.2016 DE 102016208572; 09.08.2016 DE 102016214750
(43) Veröffentlichungstag der Anmeldung: 06.02.2019
(73) Patentinhaber: Siemens Energy Global GmbH & Co. KG, 81739 München (DE)
(72) Erfinder: BENKERT, Katrin, 90571 Schwaig (DE); HARTMANN, Werner, 91085 Weisendorf (DE); KOLETZKO, Martin, 91052 Erlangen (DE); KOSSE, Sylvio, 91052 Erlangen (DE); LANG, Steffen, 91352 Hallerndorf (DE); RETTENMAIER, Thomas, 91052 Erlangen (DE); WENZEL, Norbert, 91056 Erlangen (DE)
(86) Internationale Anmeldenummer: PCT/EP2017/058352
(87) Internationale Veröffentlichungsnummer: WO 2017/198391

(56) Entgegenhaltungen:
- DE-A1- 102012 214 055
- DE-A1- 19 946 343
- DE-T5- 112011 102 526
- GB-A- 479 084
- US-A1- 2003 141 282

## Beschreibung

Die Erfindung betrifft ein Verfahren zur Herstellung eines keramischen Isolators nach dem Oberbegriff des Patentanspruches 1.

Die Isolierfähigkeit von Festkörpern, wie beispielsweise Aluminiumoxidkeramik gegenüber Beanspruchungen mit Hochspannung ist im Allgemeinen sehr hoch, sie findet jedoch ihre Grenzen in der endlichen Durchschlagfestigkeit von Festkörpern. Dies gilt auch für Hochspannungsisolatoren, insbesondere keramische Isolatoren für Mittel- und Hochspannungsvakuumschaltröhren. Isolatoren sind z. B. aus der DE 10 2012 214055 A1, der DE 199 46 343 A1 und der DE 11 2011 102526 T5 bekannt. Ursache ist der Entladungsaufbau innerhalb von Isolatoren, der durch die Defektdichte in Feldrichtung mitbestimmt wird. Dabei skaliert die dielektrische Festigkeit, die Durchbruchfeldstärke im Festkörper nicht direkt mit der Isolatorlänge, sondern sie ist proportional zu der Wurzel der Isolatorlänge. Dies hat zur Folge, dass es insbesondere für hohe Spannungen über etwa 100 kV zunehmend schwieriger wird, die notwendige Spannungsfestigkeit von beispielsweise Vakuumschaltröhren für den Hochspannungsbereich, also in einem Bereich von mehr als 72 kV zu bewerkstelligen. Bisher wurde dieses Problem insbesondere bei Vakuumschaltröhren der Energieübertragungs- und Verteilertechnik dadurch gelöst, dass an Stellen eines einzelnen zylindrischen Isolatorbauteils mit einer größeren Länge mehrere kürzere Bauteile verwendet werden, die durch eine geeignete, vakuumdichte und mechanisch stabile Verbindungstechnik, wie z.B. durch ein Hartlot, in axialer Richtung miteinander verbunden werden. Der Verbund von mehreren solchen kürzeren Isolatoren hat gemäß der oben beschriebenen Gesetzmäßigkeit der internen Spannungsfestigkeit eine höhere Spannungsfestigkeit als ein gleichlanger, einstückiger Isolator. Insgesamt ist dieses Lotverfahren jedoch sehr kostenintensiv, da ein hoher technischer Aufwand erforderlich ist, die entsprechende Vakuumdichtigkeit für die Verbindung zu erzeugen.

Die Aufgabe der Erfindung besteht daher darin, einen technisch kostengünstig herzustellenden keramischen Isolator für eine Hoch- oder Mittelspannungsschaltanlage bereitzustellen, insbesondere mit einer produktionstechnisch deutlich vereinfachten Herstellung der Äquipotentialschichten insbesondere unter den hohen Anforderungen an Vakuumdichtigkeit und elektrischer Isolation.

Die Lösung der Aufgabe besteht im Verfahren zur Herstellung eines keramischen Isolators nach Patentanspruch 1.

Das erfindungsgemäße Verfahren gemäß Patentanspruch 1 zur Herstellung eines keramischen Isolators für eine Hoch- oder Mittelspannungsschaltanlage stellt sich dabei in der Form dar, dass mindestens zwei achsensymmetrische keramische Strukturelemente entlang ihrer Symmetrieachse gefügt werden und zwischen den Strukturelementen eine elektrisch leitfähige Äquipotentialschicht angeordnet ist. Das Verfahren zeichnet sich dadurch aus, dass ein Grundmaterial für die Äquipotentialschicht bereits vor einem Sinterprozess der keramischen Strukturelemente zwischen diesen angebracht wird.

Unter dem Begriff Strukturelement wird dabei einem selbsttragendes keramisches Material verstanden, das aus einem sogenannten Grünkörper hervorgegangen ist, wobei hierbei ein Sinterprozess angewandt wird. Als Grünkörper bezeichnet man dabei einen keramischen Vorkörper in einem ungesinterten Zustand, der sich noch leicht bearbeiten lässt. Ein Grünkörper wird beispielsweise durch Pressen von Keramikpulver über Schlickerguss, gegebenenfalls mit Bindemitteln versetzt oder durch Extrusionsverfahren hergestellt. Bei einem Sinterprozess werden feinkörnige keramische oder auch metallische Stoffe, gegebenenfalls unter erhöhtem Druck, erhitzt, wobei die Temperaturen jedoch unterhalb der Schmelzpunkttemperatur der Hauptkomponenten bleiben, so dass die Gestalt bzw. die Form des Werkstückes weitgehend erhalten bleibt (unter Berücksichtigung von üblichem sogenanntem Sinterschwund). Dabei kommt es in der Regel zu einer Schwindung, wobei sich die Partikel des Ausgangsmaterials verdichten und Porenräume aufgefüllt werden. Dabei unterscheidet man zwischen Festphasensintern und Flüssigphasensintern, wobei bei dem Festphasensintern im Wesentlichen durch Diffusionsprozesse zwischen den einzelnen Partikeln sogenannte Sinterhälse gebildet werden, die zu einer festen, letztlich monolithischen Verbindung führen. Derselbe Prozess kann auch unter Beteiligung einer Flüssigphase erfolgen, so dass auch auf diese Weise eine monolithische Verbindung zwischen den Partikeln des vormaligen Grünkörpers erzeugt wird. Diffusionsprozesse und Schmelzvorgänge können während eines Sinterprozesses in einem Körper je nach Zusammensetzung der Phasen des Grünkörpers gemeinsam parallel auftreten. Der Sinterprozess findet als Wärmebehandlung bei erhöhten Temperaturen statt, üblich sind Temperatur zwischen 500° und 1500°, was sehr von der Art des verwendete keramischen Grundmaterials bzw. beim Sintern von Metallen des metallischen Grundmaterials, das zur Herstellung des Grünkörpers herangezogen wird, abhängt.

Unter Äquipotentialschichten werden dabei leitende Schichten zwischen den keramischen Strukturelementen verstanden, die eine höhere elektrische Leitfähigkeit als das keramische Material der Strukturelemente aufweist und die dabei senkrecht bezüglich der Symmetrieachse angeordnet sind und die für axiale elektrische Felder sogenannte Äquipotentialflächen definieren. Dadurch wird die Keramik intern elektrisch in kurze axiale Stücke unterteilt, wodurch sich die dielektrische Festigkeit der Teilstrecke wie auch des gesamten Isolators erhöht. Durch das beschriebene Verfahren des direkten Einbringens der Äquipotentialschichten zwischen die ungebrannten Strukturelemente vor einem Sinterprozess wird die Herstellung der Äquipotentialschichten insbesondere unter den hohen Anforderungen an Vakuumdichtigkeit und elektrischer Isolation produktionstechnisch deutlich vereinfacht, was eine kostengünstigere Herstellung des gesamten Isolators erlaubt.

Besonders vorteilhaft ist es, wenn der Sintervorgang des keramischen Strukturelementes und dabei ein Fügevorgang der Strukturelemente, unter Beteiligung des Materials, für die Äquipotentialschicht zumindest teilweise im selben Verfahrensschritt erfolgt. Unter demselben Verfahrensschritt wird dabei verstanden, dass ein bereits vorgefügter Isolatorrohling, bestehend aus Grünkörpern des Strukturelementes mit dazwischen angeordnetem Grundmaterial für Äquipotentialschichten, gemeinsam einer Temperaturbehandlung unterzogen wird. Grundsätzlich ist es möglich, dass für die Sinterung der Strukturelemente eine höhere oder niedrigere Temperatur benötigt wird als für die Bildung der Äquipotentialschichten. somit kann der Gesamtprozess zweistufig oder insgesamt mehrstufig ausgelegt sein, wobei auch grundsätzlich verschiedene Atmosphären vorherrschen können und zwischendurch auch ein Abkühlprozess vonstattengehen kann. All diese sukzessiv aufeinanderfolgenden Teilschritte, bei denen währenddessen keine mechanische Bearbeitung des Materials erfolgt, werden in diesem Fall unter demselben Verfahrensschritt verstanden.

Zweckmäßig ist es, wenn ein Grundmaterial für die Äquipotentialschicht eine Metallfolie, ein Metallpulver, ein metallisches Gewebe, eine leitfähige Keramik oder ein elektrisch leitfähiges, glasbildendes Material ist. Es können auch Mischungen aus den genannten Substanzen verwendet werden, wobei schlussendlich für die benötigte Leitfähigkeit, die bezüglich der Anwendung berechnet wird, eine geeignete Materialzusammensetzung gewählt wird, so dass eben diese Leitfähigkeit gezielt eingestellt wird. Hierbei wird bei der Auswahl der Grundmaterialien für die Äquipotentialschicht neben der elektrischen Leitfähigkeit der Materialien auch auf deren Sinterverhalten bzw. Fügeverhalten zwischen der Äquipotentialschicht und den Strukturelementen geachtet.

Bevorzugt wird das Grundmaterial für die Äquipotentialschicht zwischen zwei Grünkörpern des keramischen Strukturelementes eingebracht. In dieser Variante wird zunächst ein Grünkörper nach dem klassischen beschriebenen keramischen Formgebungsverfahren hergestellt, der als Vorkörper für das Strukturelement dient. Zwischen mindestens zwei dieser Grünkörper wird nun das Grundmaterial für die Äquipotentialschicht eingebracht, wobei dieser so aufgebaute Körper nun dem Sinterprozess zugeführt wird. Auf diese Art und Weise wird direkt während des Wärmebehandlungsprozesses, in dem auch der Sinterprozess stattfindet, gleichzeitig eine Verbindung zwischen den Strukturelementen unter Bildung der Äquipotentialschicht erzeugt. Ein Fügeverfahren und ein Sinterverfahren erfolgt hierbei somit nahezu simultan, bevorzugt in einem selben Verfahrensschritt, wobei dieser Verfahrensschritt, wie bereits erwähnt, mehrstufig erfolgen kann.

Dabei kann das Grundmaterial für die Äquipotentialschicht durch eine Tauchbeschichtung, durch ein thermisches Spritzverfahren, wie beispielsweise Plasmaspritzen oder Kaltgasspritzen, ferner durch ein chemisches oder ein physikalisches Abscheideverfahren, wie beispielsweise sogenannte Chemical Vapor Deposition, aufgebracht werden. Zusätzlich ist auch die Verwendung einer Folie, insbesondere einer metallischen Folie oder eines metallischen Sinterkörpers bzw. eines metallischen Rohlings in Form eines Grünkörpers möglich.

Alternativ hierzu kann das Grundmaterial für die Äquipotentialschicht auch während der Befüllung einer Pressform zwischen das keramische Grundmaterial der Grünkörper eingebracht werden, wobei ein gemeinsamer Formgebungsprozess, insbesondere durch Pressen, erfolgt. Das Grundmaterial für das Strukturelement und das Grundmaterial für die Äquipotentialschicht wird somit in einen gemeinsamen, mehrschichtigen Grünkörper verpresst. Auch dieser Grünkörper wird anschließend einem Wärmebehandlungsverfahren, das einerseits einen Fügeprozess und andererseits einen Sinterprozess enthält, zugeführt, wobei beim Fügeprozess ähnliche physikalische Phänomene, beispielsweise in Form von Diffusionen und Schmelzverbindungen auftreten können, wie beim Sinterprozess.

Ein keramischer Isolator für eine Hoch- oder Mittelspannungsschaltanlage weist mindestens zwei achsensymmetrische keramische Strukturelemente auf, wobei die Strukturelemente durch eine Äquipotentialschicht verbunden sind. Der keramische Isolator zeichnet sich z. B. dadurch aus, dass die Länge der Strukturelemente entlang ihrer Symmetrieachse zwischen 15 und 35 mm beträgt. Aufgrund eines wurzelförmigen Verlaufes des Zusammenhangs zwischen einer Durchschlagfestigkeit des keramischen Isolatormaterials und der Länge des keramischen Strukturelementes kann durch deutliche Erhöhung der Länge des einzelnen Strukturelementes keine signifikante Erhöhung der Durchschlagfestigkeit erzielt werden. Durch eine deutliche Verkürzung der Strukturelemente und das entsprechende Einbringen von leitenden Äquipotentialschichten zwischen Strukturelemente kann unter Verwendung mehrerer Strukturelemente, die auch mehrere Fügeverbindungsschichten, also Äquipotentialschichten erfordern, bei einer kürzeren Bauweise des Isolators eine höhere oder zumindest gleichhohe Durchschlagfestigkeit erzielt werden. Es hat sich erfindungsgemäß herausgestellt, dass bei Verwendung von Strukturelementen, die eine Länge zwischen 15 mm und 35 mm, insbesondere zwischen 20 mm und 30 mm, sich ein Isolator aufbauen lässt, der eine starke Verkürzung gegenüber einem herkömmlichen Isolator mit Strukturelementen in der Länge von ca. 80 mm bewirkt. Dabei wird ein Optimum zwischen Verkürzung und Anwendung von technisch aufwendigeren und kostenintensiveren Äquipotentialschichten erzielt.

Besonders zweckmäßig ist dieser Aufbau dann, wenn zwischen den Strukturelementen und der mindestens einen Äquipotentialschicht eine monolithische Verbindung besteht, die beispielsweise vorteilhaft bei einem gemeinsamen Wärmebehandlungsschritt zur Sinterung der Strukturelemente und zum Fügen dieser durch die Äquipotentialschicht durch Sinterprozesse zwischen den einzelnen Partikeln des Grundmaterials für die Äquipotentialschicht und die Partikel für das keramische Grundmaterial des Strukturelementes entsteht. Insbesondere handelt es sich bei der monolithischen Verbindung bevorzugt um eine Sinterverbindung.

Weitere Ausgestaltungsformen und weitere Merkmale der Erfindung werden anhand der folgenden Beispiele näher erläutert. Dabei handelt es sich um exemplarische Ausgestaltungsformen, die keine Einschränkung des Schutzbereiches darstellen. Dieselben Merkmale in unterschiedlichen Ausgestaltungsformen werden dabei mit denselben Bezugszeichen versehen.

Dabei zeigen:
- Figur 1: eine Querschnittsdarstellung durch eine Vakuumschaltröhre mit einem keramischen Isolator,
- Figur 2: einen Aufbau von Grünkörpern für ein Strukturelement, die mit Vorkörpern für eine Äquipotentialschicht gestapelt sind,
- Figur 3: ein Formgebungswerkzeug mit einem darin entstehenden mehrschichtigen Grünkörper und
- Figur 4: den parabelförmigen Zusammenhang zwischen einer Durchbruchfeldstärke von keramischen Isolatoren mit deren Länge.

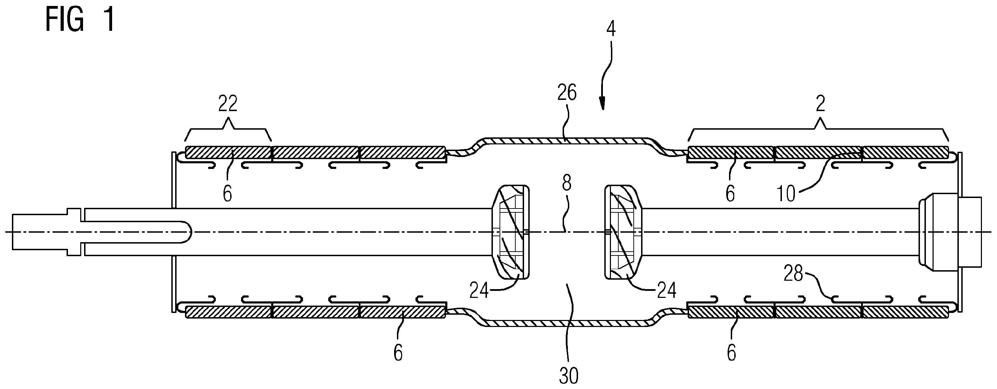

In Figur 1 ist eine Schaltanlage 4 dargestellt, die einen keramischen Isolator 2 aufweist, wobei der keramische Isolator 2 zwei oder mehrere keramische Strukturelemente 6 umfasst, die durch Äquipotentialschichten 10 voneinander getrennt sind. Diese Äquipotentialschichten 10 können im Stand der Technik Lotschichten sein oder metallische Ringe, die zwischen die Strukturelemente 6 gelötet werden. In vielen Fällen weisen diese Äquipotentialschichten 10 oder metallische Verbindungsschichten auch Schirmungsbleche 28 auf, die elektrische Feldlinien von den keramischen Oberflächen der Strukturelemente 6 abschirmen und entsprechend zu den Äquipotentialschichten leiten. Die Strukturelemente 6 bzw. der keramische Isolator 2 sind achsensymmetrisch entlang einer Symmetrieachse 8 aufgebaut, wobei sie dabei in der Regel rotationssymmetrisch dargestellt sind. Grundsätzlich ist die gesamte Schaltanlage in der Regel rotationssymmetrisch mit unterschiedlichen Querschnittradien ausgestaltet. Dabei ist der keramische Isolator 2 Bestandteil des Gesamtgehäuses 26 der Schaltanlage 4. In der Schaltanlage 4 sind in einer Vakuumschaltkammer 30 Schaltkontakte 24 angeordnet, die beweglich entlang der Symmetrieachse 8 ausgestaltet sind, und die durch die Bewegung einen elektrischen Kontakt in der Schaltanlage 4 aufbauen bzw. trennen können.

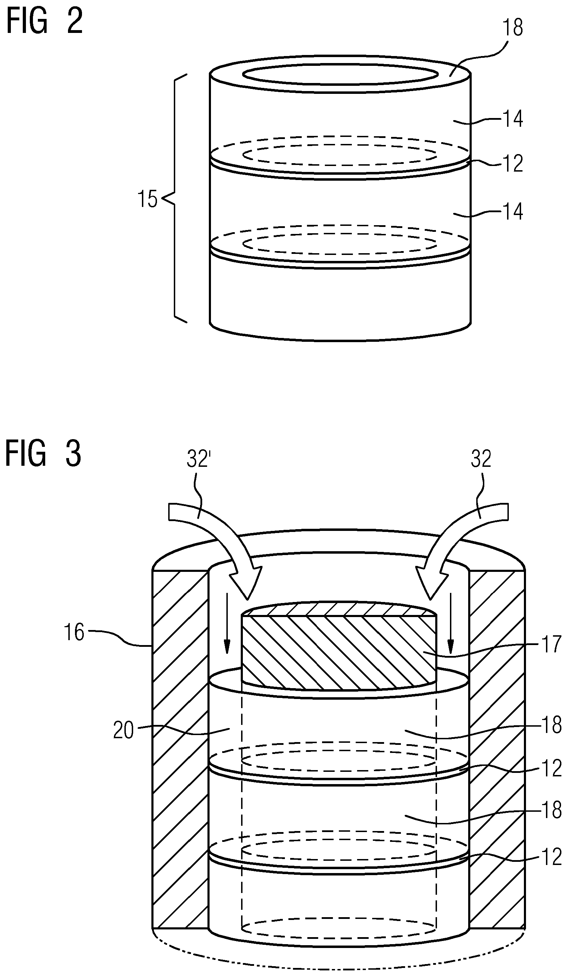

In Figur 2 ist eine Darstellung eines gestapelten Körpers 15 gegeben, der sowohl vom Grünkörper 14, die als Vorkörper für die keramischen Strukturelemente 6 dienen, als auch ein Grundmaterial 12 für Äquipotentialschichten 10 umfasst. Dabei werden mindestens zwei Grünkörper 14 und ein Grundmaterial 12 übereinandergestapelt, wobei es in dieser Ausgestaltungsform so ist, dass der Grünkörper 14 bereits in einem separaten Prozess entsprechend rotationssymmetrisch geformt wird. Dabei wird beispielsweise ein Schlickergießverfahren oder ein axiales bzw. unaxiales Pressverfahren angewandt. Die in Figur 2 dargestellte Stapelung 15 wird nun einem Wärmebehandlungsprozess zugeführt. Der Wärmebehandlungsprozess kann dabei mehrstufig verlaufen, wobei dieser je nach Ausgestaltung und physikalisch chemischem Verhalten der einzelnen Grundmaterialien 12 bzw. einem keramischen Grundmaterial 18 für den Grünkörper 14 angepasst ist. Bei einem Wärmebehandlungsprozess erfolgt ein Sintervorgang, so dass das Grundmaterial 18 der Keramik nach dem beschriebenen Mechanismus des Sinterns verdichtet wird. Gleichzeitig erfolgt ein vergleichbarer Prozess, der auf den selben physikalischen Phänomen basiert, wobei auch hier gegebenenfalls durch Diffusionsprozesse und/oder Schmelzprozesse eine Verdichtung erfolgt, die in diesem Fall als Sintern bezeichnet wird. Nach diesem Prozess ist das Grundmaterial 12 zur endgültigen Äquipotentialschicht 10 umgewandelt, die dann eine vakuumdichte, elektrisch zumindest teilweise leitfähige Schicht zwischen den nun fertig gestellten Strukturelementen 6 bildet.

Ein alternatives Vorgehen kann gemäß Figur 3 darin bestehen, dass in ein Formgebungswerkzeug für einen Gesamtverbundgrünkörper 20 alternierend das Grundmaterial 18 für den Grünkörper 14 des Strukturelementes 6 und anschließend das Grundmaterial 12 für die Äquipotentialschicht 10 eingefüllt werden. Dieses Einfüllen kann durch Schlickergießen oder durch Pulverschüttungen erfolgen. Anschließend erfolgt eine Verdichtung, die am Beispiel einer Pressform 16 dargestellten Verdichtung durch einen nicht dargestellten entsprechenden Pressstempel der Übersichtlichkeit halber nicht dargestellt ist. Dabei ist zu erwähnen, dass zur Generierung eines Hohlraums bzw. einer Darstellung eines ringförmigen bzw. zylinderförmigen keramischen Isolators in der Mitte der Pressform 16 eine Pinole 17 angeordnet ist. Das alternierende Einfüllen der unterschiedlichen Grundmaterialien 12 und 18 wird durch die Pfeile 32 und 32' veranschaulicht.

Ein so hergestellter mehrschichtiger Grünkörper 20 wird einem analogen Wärmebehandlungsprozess, der bereits bezüglich des Aufbaus in Figur 2 beschrieben ist, unterzogen. Hierbei kommt es ebenfalls zu Versinterungen bzw. Sinterhalsbildungen zwischen den einzelnen Partikeln innerhalb des Strukturelementes 6 bzw. innerhalb der Äquipotentialschicht 10 und in einem Fügebereich zwischen dem Strukturelement 6 und der Äquipotentialschicht 10 kommt. Somit wird hier in dem Grünkörper 20 nach Figur 3 wie auch in dem Körper gemäß Figur 2 eine monolithische Verbindung zwischen dem Strukturelement 6 und der Äquipotentialschicht 10 gebildet.

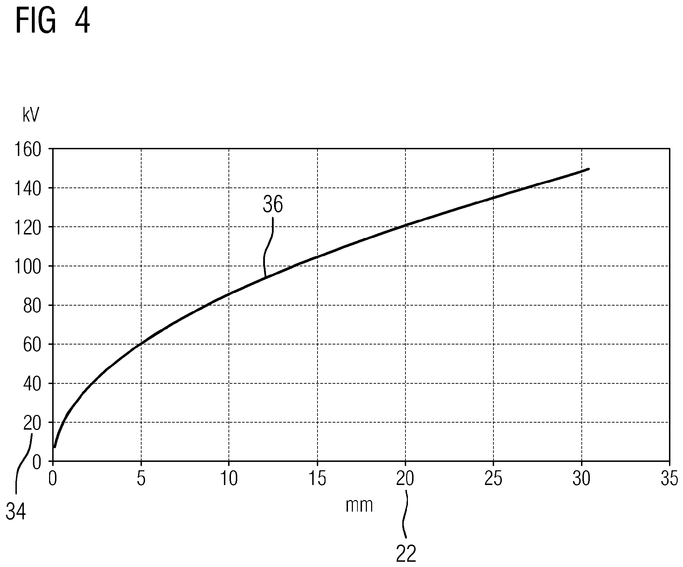

In Figur 4 ist eine Darstellung der Abhängigkeit einer Durchbruchsspannung 34 in Abhängigkeit der Länge bzw. Höhe 22 eines Strukturelementes 6 gegeben. Die Kurve selber, die eine wurzelförmige Abhängigkeit der genannten Größen darstellt, wird mit dem Bezugszeichen 36 versehen. Aufgrund des wurzelförmigen Verlaufs der Kurve 36 wird sichtbar, dass bei einer Erhöhung der Länge des Strukturelementes 6 keine signifikante Erhöhung der Durchbruchsspannung 34 eintritt. Für den Fall, dass Isolatoren für sehr hohe Spannungen dargestellt werden sollen, also für Spannungen im Bereich von 450 kV, werden mehrere einzelne Strukturelemente übereinander gesetzt und durch ein aufwendiges Lötverfahren, insbesondere durch Hartlötung vakuumdicht miteinander gefügt. Dieses Aufbringen von Schmelzlot erfordert in der Regel auch teure Silberverbindungen, weshalb das Lotverfahren technologisch aufwendig und teuer ist. Für eine 450 kV Anlage werden dabei üblicherweise im Stand der Technik drei 80 mm hohe Strukturelemente entsprechend des Lotverfahrens aufwendig miteinander gefügt. Der gesamte keramische Isolator wird nach dem Stand der Technik eine Länge von 240 mm betragen.

Die beschriebene verfahrenstechnische Anordnung ist gegenüber dem Lotverfahren deutlich kostengünstiger, da das Fügeverfahren und das Sinterverfahren des Strukturelementes in einem bzw. mindestens teilweise in einem Verfahrensschritt, also in situ stattfindet. Hierdurch wird der prozessuale Aufwand bei der Herstellung deutlich vereinfacht. Auf diese Weise hat es sich herausgestellt, dass eine Höhe des Strukturelementes 6 bzw. dessen Grünkörpers 14, die zwischen 15 mm und 35 mm, bevorzugt zwischen 20 mm und 30 mm liegt, bei derselben geforderten Spannungsfestigkeit von 450 kV lediglich vier Strukturelemente erfordert. Diese wird durch drei Fügeverbindungen miteinander gefügt und weisen dabei drei Äquipotential-schichten 10 aufweisen. Auf diese Weise kann durch die Erhöhung der Anzahl der Äquipotentialschichten 10 um eine die Gesamtlänge des Isolators auf 80 mm, also auf ca. ein Drittel des Isolators aus dem Stand der Technik verkürzt werden. Demgegenüber steht eine weitere Äquipotentialschicht, die jedoch durch das beschriebene Verfahren deutlich kostengünstiger hergestellt werden kann als das im Stand der Technik angewandte Lotverfahren.

## Patentansprüche

1. Verfahren zur Herstellung eines keramischen Isolators (2) für eine Hoch- oder Mittelspannungsschaltanlage (4), wobei mindestens zwei achsensymmetrische keramische Strukturelemente (6) entlang ihrer Symmetriesachse (8) gefügt werden und zwischen den Strukturelementen (6) eine elektrisch leitfähige Äquipotentialschicht (10) angeordnet ist, die eine höhere elektrische Leitfähigkeit als ein keramisches Material des Strukturelementes aufweist und die dabei senkrecht bezüglich der Symmetrieachse angeordnet ist, **dadurch gekennzeichnet, dass** ein Grundmaterial für die Äquipotentialschicht (10) bereits vor einem Sinterprozess der keramischen Strukturelemente (6) zwischen diesen angebracht wird.

2. Verfahren nach Anspruch 1, **dadurch gekennzeichnet, dass** ein Sintervorgang der keramischen Strukturelemente (6) und ein Fügevorgang der Strukturelemente (6) zumindest teilweise im selben Verfahrensschritt erfolgen.

3. Verfahren nach Anspruch 1, **dadurch gekennzeichnet, dass** das Grundmaterial für die Äquipotentialschicht (10) eine Metallfolie, ein Metallpulver, ein metallisches Gewebe, eine leitfähige Keramik oder eine elektrisch leitfähiges glasbildendes Material ist.

4. Verfahren nach einem der Ansprüche 1 bis 3, **dadurch gekennzeichnet, dass** zwischen zwei Grünkörpern (14) des keramischen Strukturelementes (6) das Grundmaterial (12) für die Äquipotentialschicht (10) eingebracht wird.

5. Verfahren nach Anspruch 4, **dadurch gekennzeichnet, dass** das Grundmaterial (12) für die Äquipotentialschicht (10) durch eine Tauchbeschichtung, durch eine thermische Spritzschicht, durch ein chemisches oder physikalisches Abscheide-verfahren oder in Form einer Folie eingebracht wird.

6. Verfahren nach einem der Ansprüche 1 bis 3, **dadurch gekennzeichnet, dass** das Grundmaterial (12) für die Äquipotentialschicht (10) während der Befüllung in eine Pressform (16) zwischen das keramische Grundmaterial (18) der Grünkörper (14) eingebracht wird.

7. Verfahren nach Anspruch 6, **dadurch gekennzeichnet, dass** alternierend keramisches Grundmaterial (18) und Äquiptentialschicht (10) in eine Pressform (16) gefüllt wird und anschließend zu einem mehrschichtigen Grünkörper (20) gepresst wird.

8. Verfahren nach einem der vorhergehenden Ansprüche, **dadurch gekennzeichnet, dass** eine Höhe (22) der keramischen Strukturelemente (6) entlang ihrer Symmetrieachse (8) zwischen 20 mm und 35 mm beträgt.

## Claims

1. Method for producing a ceramic insulator (2) for a high-voltage or medium-voltage switching system (4), wherein at least two axially symmetrical ceramic structural elements (6) are joined along the symmetry axis (8) of the latter, and an electrically conductive equipotential layer (10) which has a higher electrical conductivity than a ceramic material of the structural element and is disposed perpendicularly to the symmetry axis is disposed between the structural elements (6), **characterized in that** a base material for the equipotential layer (10) is already attached between the ceramic structural elements (6) prior to a sintering process of the latter.

2. Method according to Claim 1, **characterized in that** a sintering procedure of the ceramic structural elements (6) and a joining procedure of the structural elements (6) are at least in part performed in the same method step.

3. Method according to Claim 1, **characterized in that** the base material for the equipotential layer (10) is a metal foil, a metal powder, a metallic woven fabric, a conductive ceramic, or an electrically conductive glass-forming material.

4. Method according to one of Claims 1 to 3, **characterized in that** the base material (12) for the equipotential layer (10) is incorporated between two green bodies (14) of the ceramic structural element (6).

5. Method according to Claim 4, **characterized in that** the base material (12) for the equipotential layer (10) is incorporated by dip coating, by a thermal spray coat, by a chemical or physical deposition method, or in the form of a foil.

6. Method according to one of Claims 1 to 3, **characterized in that** the base material (12) for the equipotential layer (10) is incorporated between the ceramic base material (18) of the green bodies (14) during the filling into a press mold (16).

7. Method according to Claim 6, **characterized in that** a ceramic base material (18) and an equipotential layer (10) are filled alternately into a press mold (16) and then pressed into a multilayer green body (20).

8. Method according to one of the preceding claims, **characterized in that** a height (22) of the ceramic structural elements (6) along their symmetry axis (8) is between 20 mm and 35 mm.

## Revendications

1. Procédé de fabrication d'un isolateur (2) en céramique pour une installation (4) de coupure en haute tension ou en moyenne tension, dans lequel on assemble au moins deux éléments (6) de structure en céramique de symétrie axiale le long de leur axe (8) de symétrie et on met, entre les éléments (6) de structure en céramique, une couche (10) d'équipotentiel conductrice de l'électricité, qui a une conductivité électrique plus grande qu'un matériau céramique de l'élément de structure et qui est disposée perpendiculairement à l'axe de symétrie, **caractérisé en ce que** l'on applique, déjà avant une opération de frittage des éléments (6), entre ceux-ci, un matériau de base pour la couche (10) d'équipotentiel.

2. Procédé suivant la revendication 1, **caractérisé en ce qu'**une opération de frittage des éléments (6) de structure en céramique et une opération d'assemblage des éléments (6) de structure ont lieu en partie dans le même stade du procédé.

3. Procédé suivant la revendication 1, **caractérisé en ce que** le matériau de base pour la couche (10) d'équipotentiel est une feuille métallique, une poudre métallique, une toile métallique, une céramique conductrice ou un matériau conducteur de l'électricité formant du verre.

4. Procédé suivant l'une des revendications 1 à 3, **caractérisé en ce que** l'on introduit le matériau (12) de base pour la couche (10) d'équipotentiel entre deux corps (14) à vert de l'élément (6) de structure en céramique.

5. Procédé suivant la revendication 4, **caractérisé en ce que** l'on introduit le matériau (12) de base pour la couche (10) d'équipotentiel par un revêtement par immersion, par une couche de pulvérisation thermique, par un procédé de dépôt chimique ou physique ou sous la forme d'une feuille.

6. Procédé suivant l'une des revendications 1 à 3, **caractérisé en ce que** l'on introduit le matériau (12) de base pour la couche (10) d'équipotentiel pendant le remplissage dans un moule (16) de pression entre le matériau (18) de base en céramique des corps (14) à vert.

7. Procédé suivant la revendication 6, **caractérisé en ce que** l'on remplit un moule (16) sous pression en alternance du matériau (18) de base en céramique et de la couche (10) d'équipotentiel et on les comprime ensuite en un corps (20) à vert à plusieurs couches.

8. Procédé suivant l'une des revendications précédentes, **caractérisé en ce qu'**une hauteur (22) des éléments (6) de structure en céramique le long de leur axe (8) de symétrie est comprise entre 20 mm et 35 mm.
